Europäisches Patentamt

European Patent Office

Office européen des brevets

(19)

(11) **EP 0 657 715 B1**

(12) **EUROPÄISCHE PATENTSCHRIFT**

(45) Veröffentlichungstag und Bekanntmachung des Hinweises auf die Patenterteilung:
**13.01.1999 Patentblatt 1999/02**

(51) Int Cl.[6]: **G01B 21/04**, G05B 19/401

(21) Anmeldenummer: **94116006.1**

(22) Anmeldetag: **11.10.1994**

(54) **Verfahren zur Korrektur von schwingungsbedingten Messfehlern bei Koordinatenmessgeräten**

Correction procedure of vibration dependant measurement errors in coordinate measuring machines

Procédé pour la correction d'erreurs de mesure sous la dépendance de vibrations dans les machines de mesures de coordonnées

(84) Benannte Vertragsstaaten:
**DE FR GB IT**

(30) Priorität: **11.12.1993 DE 4342312**

(43) Veröffentlichungstag der Anmeldung:
**14.06.1995 Patentblatt 1995/24**

(73) Patentinhaber:
• **Carl Zeiss**
  **D-89518 Heidenheim (Brenz) (DE)**
• **CARL-ZEISS-STIFTUNG,**
  **HANDELND ALS CARL ZEISS**
  **89518 Heidenheim (Brenz) (DE)**

(72) Erfinder:
• **Ebersbach, Peter, Dr.**
  **D-73457 Essingen (DE)**
• **Müller, Helmut**
  **D-73527 Schwäbisch Gmünd (DE)**

(56) Entgegenhaltungen:
**EP-A- 0 556 574**          **DE-A- 3 801 893**
**DE-A- 4 035 923**          **US-A- 4 333 238**
**US-A- 4 782 598**

## Beschreibung

Bei Koordinatenmeßgeräten und insbesondere solchen vom sogenannten Ständertyp treten im Zuge von Beschleunigungsund Bremsvorgängen relativ große Schwingungen in der Maschinenstruktur auf, die von den Wegmeßsystemen, d.h. den Maßstäben des Koordinatenmeßgerätes nicht mit erfaßt werden und deshalb zu Fehlmessungen führen. Denn im Zuge dieser Schwingungen wird der Meßkopf des Koordinatenmeßgerätes aus der von den Maßstäben angegebenen Nullage ausgelenkt, und dementsprechend ist die Position des Meßkopfes zum Antastzeitpunkt, d.h. wenn der Taster des Meßkopfes das Werkstück berührt, nicht exakt definiert. Bei StänderMeßgeräten treten diese Schwingungen mit großer Amplitude insbesondere dann auf, wenn der waagerechte Meßarm bzw. Meßbalken des Gerätes voll ausgefahren und an das obere Ende des vertikalen Ständers des Gerätes verfahren ist, d.h. in Randpositionen des Meßbereichs, wo die Maschinenkonfiguration weniger steif ist.

In der US-PS 4 333 238 ist allerdings für Koordinatenmeßgeräte vom sogenannten Portaltyp, bereits vorgeschlagen worden, die dynamischen Verbiegung der dort vertikalen Meßpinole des Gerätes mit Hilfe eines Beschleunigungssensors zu erfassen und den vom Meßkopf des Gerätes gelieferten Koordinatenmeßwert zu korrigieren, indem Korrekturwerte für verschiedene Stellen im Meßbereich der Maschine über eine nicht näher bezeichnete Zuordnungsvorschrift entsprechend den Meßwerten des Beschleunigungssensors ausgewählt werden.

Das beschriebene System ist jedoch bisher nie zur Korrektur von schwingungsbedingten Meßfehlern in Koordinatenmeßgeräten eingesetzt worden, in erster Linie wohl deshalb, weil es keine einfache durch Kalibrieren auffindbare Zuordnungsvorschrift gibt, mit der die Meßwerte der Beschleunigungssensoren in die zugehörige Auslenkung des Tastelementes zum Zeitpunkt der Messung umgerechnet werden können. Dementsprechend werden heutzutage Beschleunigungsaufnehmer in Koordinatenmeßgeräten nur eingesetzt, um die Amplitude der Schwingungen zu erfassen und das entsprechende Signal zur Überwachung der gewonnenen Koordinaten-meßwerte im Sinne einer Ja/Nein-Aussage "Messung gültig" bzw. "Schwingungsamplitude zu hoch, d.h. Messung ungültig" auszuwerten, wie das beispielsweise in der DE-OS 40 35 923 und in der vorstehend genannten US-PS 4 333 238 erwähnt ist.

Aus der US-PS 4 782 598 ist es bekannt, die Neigungsfehler der Maschinenteile eines Koordinatenmeßgeräts permanent zu erfassen und aufgrund der bekannten geometrischen Beziehungen zwischen den Maschinenteilen auf die Lage des Tastelementes rückzurechnen. Dieses Verfahren benötigt jedoch relativ viele Sensoren an verschiedenen Stellen der Maschine und liefert nur im statischen Betrieb brauchbare Ergebnisse. Auch hier wird die Schwingung der Maschinenteile über ein sogenanntes "Vibration Filter (66) (vgl. Figur 9) nur ausgewertet, um die Gültigkeit von Meßwerten im Sinne einer Ja/Nein-Aussage zu überwachen.

Es ist die Aufgabe der vorliegenden Erfindung ein Verfahren anzugeben, das es erlaubt, mit wenigen preiswerten Sensoren den Schwingungszustand des Tastelements bei einem Koordinatenmeßgerät zuverlässig zu erfassen und den aufgrund von Störschwingungen bedingten Fehler des Koordinatenmeßwertes zuverlässig zu korrigieren.

Diese Aufgabe wird mit den im Anspruch 1 angegebenen Maßnahmen gelöst. Ein nach dem Verfahren korrigiertes Koordinatenmeßgerät besitzt den in Anspruch 12 angegebenen Aufbau.

Bei dem erfindungsgemäßen Verfahren ist es erstmals möglich, aus den Signalen von relativ preiswerten Sensoren wie beispielsweise Beschleunigungsaufnehmern Korrekturwerte zu gewinnen, mit denen sich die Antastunsicherheit von Koordinatenmeßgeräten aufgrund von Schwingungen in der Maschinenstruktur drastisch verringern läßt. So war es beispielsweise möglich, die Streubreite der Koordinatenmeßwerte einer unkorrigierten Ständer-Meßmaschine von ca. 80 µm mit Hilfe des erfindungsgemäßen Verfahrens auf eine Streubreite von 11 µm zu vermindern. Entsprechend kann bei ansonsten gleichbleibender Maschinenkonstruktion der Meßkopf schneller verfahren werden oder mit der Maschine genauer gemessen werden. Der zur Durchführung des Verfahrens erforderliche Mehraufwand ist relativ gering, da nur wenige, preiswerte Sensoren, beispielsweise drei Beschleunigungsaufnehmer für die drei Koordinatenrichtungen benötigt werden, in denen der Meßkopf schwingen kann.

Die Erfindung geht von der Erkenntnis aus, daß es nicht möglich ist, die momentane Auslenkung eines schwingenden Maschinenteils zuverlässig allein aus den zu diesem Zeitpunkt gelieferten Signalen von Beschleunigungsaufnehmern zu gewinnen. Vielmehr hat sich gezeigt, daß es erforderlich ist, die relativen Phasen- und Amplitudenbeziehungen der verschiedenen Schwingungsanteile, die zur Gesamtschwingung beitragen, zu bestimmen. Diese Schwingungsanteile sind bestimmt durch ihre Eigenfrequenzen, Dämpfungsmaße und Eigenformen, sowie die Anfangsbedingung der Schwingung. Nur wenn diese Größen bekannt sind, läßt sich der dynamische, d.h. schwingungsbedingte Meßfehler der Koordinatenmessung als Schwingweg am Ort des Tastelementes aus dem Schwingweg am Ort der Sensoren ermitteln. Da die Eigenformen, Eigenfrequenzen und Dämpfungsmaße von der jeweiligen Stellung des Meßkopfes im Meßbereich des Koordinatenmeßgeräts abhängig sind, werden diese für die exakte Berechnung des schwingungsbedingten Meßfehlers erforderlichen Größen zweckmäßig für verschiedene Stellungen der Meßschlitten des Koordinatenmeßgeräts ermittelt und beispielsweise als mehrdimensionales Datenfeld gespeichert. Zur Bestimmung der Anfangsbedingungen ist es erforderlich, den Verlauf der Signale der Sensoren zumindest über ein gewisses Zeitintervall in der Nähe des Antastzeitpunktes aufzuzeichnen. Aus diesem zeitlichen Verlauf läßt sich dann bei Kenntnis der vorgenannten Parameterwerte der Momentanwert der Schwingungsamplitude zuverlässig aus den Beschleu-

2

nigungssignalen der Sensoren ermitteln.

Weitere Vorteile der Erfindung sind Gegenstand der Unteransprüche und ergeben sich aus der nachfolgenden Beschreibung von Ausführungsbeispielen anhand der Figuren 1-7 der beigefügten Zeichnungen.

Figur 1    ist eine perspektivische Darstellung eines Koordinatenmeßgeräts in Ständerbauweise;

Figur 2    zeigt das vordere Ende des Meßarms (5) mit dem daran befestigten Tastkopf (7) teils in Seitenansicht, teils im Schnitt bei im Vergleich zu Figur 1 vergrößertem Maßstabe;

Figur 3    ist ein Blockschaltbild, das die wesentlichen Komponenten der Elektronik des Koordinatenmeßgeräts aus Figur 1 zeigt;

Figur 4    ist ein Diagramm, in dem der zeitliche Verlauf des Signals eines Beschleunigungssensors beispielhaft dargestellt ist.

Figur 5    ist eine perspektivische Prinzipskizze eines Koordinatenmeßgeräts vom Portaltyp, das gemäß der Erfindung modifiziert ist;

Figur 6    ist eine vereinfachte Skizze, die das vordere Ende des Meßarms (5) der Maschine nach Figur 1 mit einem daran angesetzten, sogenannten Dreh-Schwenkgelenk zeigt;

Figur 7    ist eine einfache Prinzipskizze, die das Schwingungsverhalten eines Koordinatenmeßgerätes vom Ständertyp verdeutlicht.

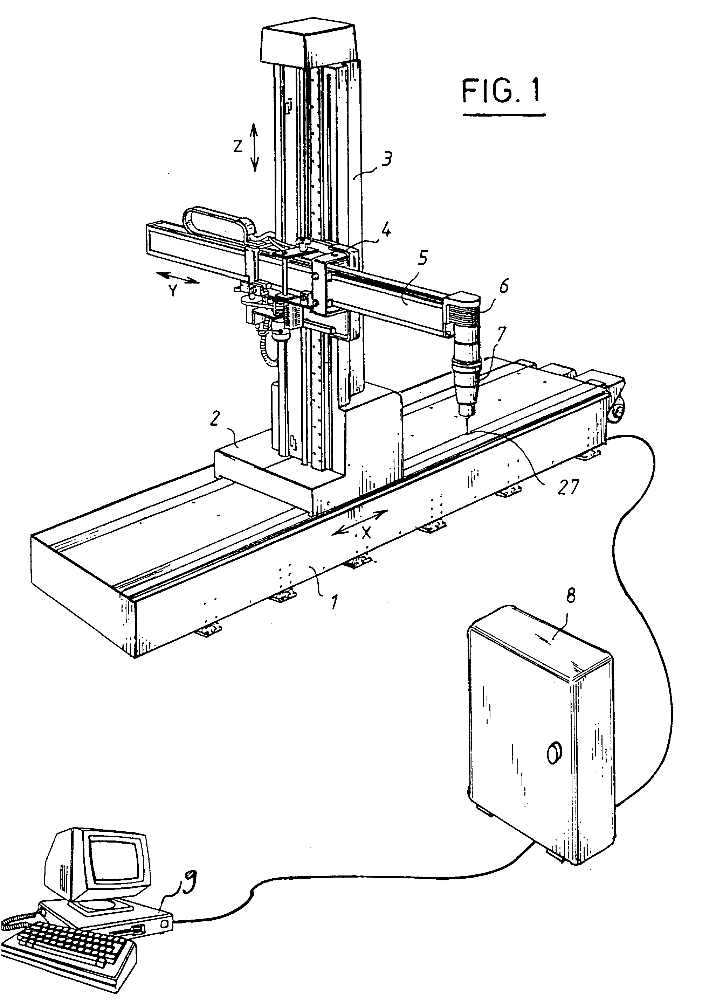

Das in Figur 1 dargestellte Koordinatenmeßgerät in Ständerbauweise besitzt ein stabiles Maschinenbett (1), das beispielsweise auch in das Fundament einer Fabrikhalle eingelassen werden kann. Die Maschinenbasis (1) enthält die Führungen für den in Richtung des mit X bezeichneten Pfeils verschiebbaren sogenannten X-Schlitten (2), der den vertikalen Ständer (3) des Gerätes trägt. In diesem Ständer (3) ist der sogenannte Kreuzschieber (4) des Meßgeräts entlang des mit Z bezeichneten Pfeils vertikal verschiebbar. Der Kreuzschieber (4) enthält seinerseits die Lager, in denen der nach Art eines waagerechten Balkens ausgebildete Meßarm (5) entlang des mit Y bezeichneten Pfeils ausfahrbar ist. Am vorderen Ende des Meßarms (5) ist über einer Halterung (6) der Meßkopf (7) des Koordinatenmeßgeräts angesetzt. Dessen beweglicher Taststift trägt die Tastkugel (27), mit dem das in der Figur nicht dargestellte, koordinatenmäßig zu vermessende Werkstück angetastet wird.

Mit (8) ist der Steuerschrank des Gerätes bezeichnet, der die Elektronik für die Antriebe und die Meßsysteme, d. h. für die in den einzelnen Verschiebeachsen (X, Y, Z) angebrachten Maßstäbe enthält. Die Steuerung (8) kommuniziert über einen Datenbus mit dem Rechner (9) des Koordinatenmeßgerätes, auf dem die Meß- und Auswerte-Software für das Gerät geladen ist.

Koordinatenmeßgeräte mit dem beschriebenen Aufbau sind an sich bekannt und werden beispielsweise von der Anmelderin unter der Bezeichnung PSM und SMC angeboten.

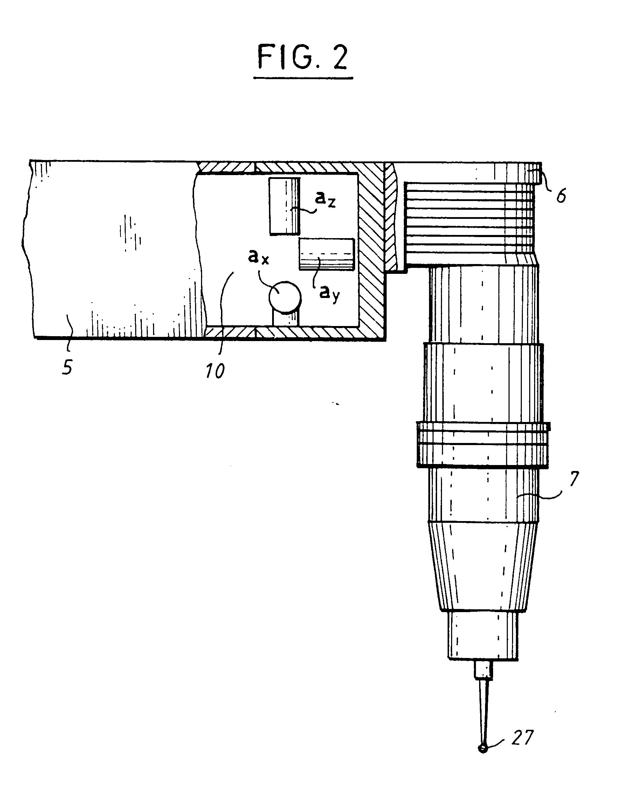

Gemäß der Erfindung sind nun in das vordere Ende des Meßarms (5) in unmittelbarer Nähe der Halterung (6) für den Meßkopf (7) drei Beschleunigungssensoren ($a_x$, $a_y$, $a_z$) eingebaut. Deren Anordnung geht aus der vergrößerten Darstellung nach Figur 2 hervor. Bei diesen Sensoren handelt es sich um Tauchspulensysteme, deren Achsen entsprechend den drei Raumrichtungen (x, y, z) ausgerichtet sind. Die Signalleitungen für diese Sensoren sind über abgeschirmte Kabel zusammen mit den Signalleitungen für den Meßkopf (7) zum Steuerschrank (8) verlegt.

Die Sensoren ($a_x$, $a_y$, $a_z$) dienen dazu, die Schwingungen, denen der Meßarm (5) beim Betrieb des Koordinatenmeßgeräts unterliegt, meßtechnisch zu erfassen. Denn um die Amplitude dieser Schwingungen ist die Position des Meßkopfs (7) zum Antastzeitpunkt unbestimmt, wenn der Schwingungsweg nicht geeignet erfaßt und den von den Maßstäben des Koordinatenmeßgeräts gelieferten Positionsmeßwerten hinzugerechnet wird.

Schwingungen des Meßarms (5) treten beispielsweise immer dann auf, wenn einer der Antriebe der drei Meßschlitten des Koordinatenmeßgeräts z.B. vom sogenannten "Eilgang" auf die konstante sogenannte "Antastgeschwindigkeit" abgebremst wird, mit der sich anschließend der Meßkopf (7) bis zum Kontakt der Tastkugel (27) mit dem Werkstück auf dieses zubewegt. Jedoch können die Schwingungen auch durch Vibrationen im Fundament, durch die Lageregler der Antriebe etc. angeregt werden.

Auf den erstgenannten Fall des Abbremsvorganges bezogen hat man es mit abklingenden Schwingungen zu tun, die aus einer Überlagerung von Ausschwingkurven der einzelnen Eigenfrequenzen der Maschinenstruktur bestehen. Zu jeder Eigenfrequenz gehört eine bestimmte Schwingungsform (Eigenform), die die Art und Weise der Verbiegung der Struktur des Koordinatenmeßgeräts beschreibt.

Zur Ermittlung der Anteile, mit der die einzelnen Eigenformen an der Gesamt schwingung beteiligt sind, sind die

drei Beschleunigungsaufnehmer ($a_x$, $a_y$, $a_z$) entsprechend den drei Raumrichtungen angeordnet und an einem Ort angebracht, an dem möglichst große Schwingungsamplituden für die den Koordinatenmeßwert bzw. dessen Meßfehler beeinflussenden Eigenfrequenzen vorhanden sind. Die räumliche Anordnung der drei Sensoren stellt außerdem sicher, daß alle Schwingungsanteile erfaßt werden.

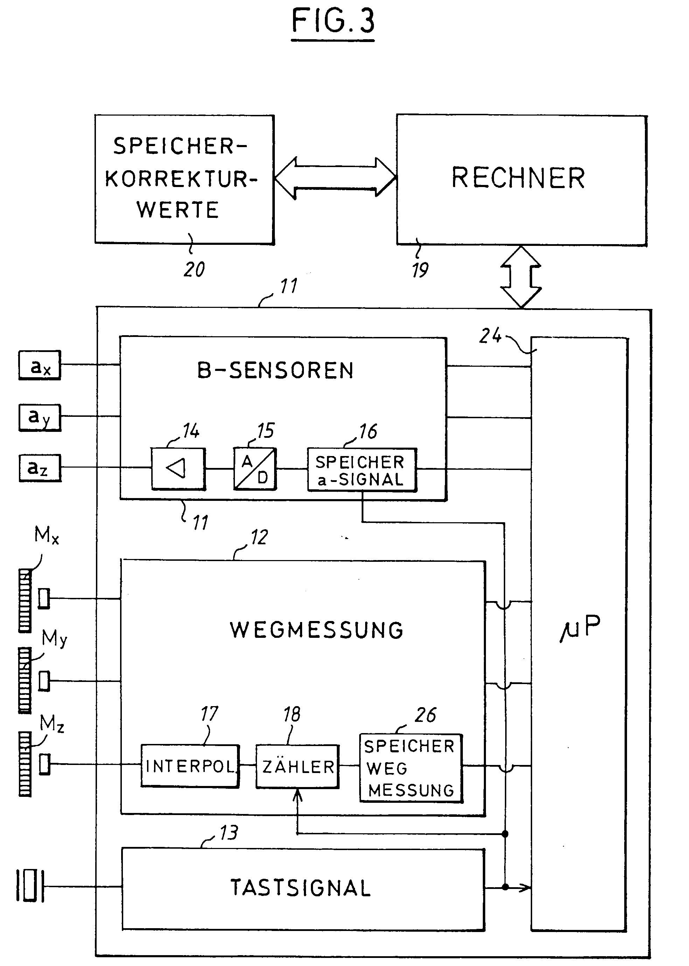

Wie aus dem Blockschaltbild nach Figur 3 ersichtlich ist, werden die Signale der drei Sensoren ($a_x$, $a_y$, $a_z$) in der Steuerung (8) auf einer Leiterkarte (11) parallel weiterverarbeitet und hierbei zuerst verstärkt (14), dann wird das analoge Beschleunigungssignal im Maschinentakt von beispielsweise 5 ms digital gewandelt (15) und in einen sogenannten rollierenden Speicher (16) eingelesen. In diesem Speicher (16) liegen die Signale dann stets während eines 100 - 200 ms zurückreichenden Zeitraums gespeichert vor, so daß aus ihrem zeitlichen Verlauf, wie später noch beschrieben wird, der Momentanwert der schwingungsbedingten Auslenkung des Meßkopfs (7) berechnet werden kann.

Die Steuerung (8) enthält ebenfalls die Elektronik (12) mit den drei Kanälen zur Verarbeitung der Signale der Linearmeßsysteme (Maßstäbe $M_x$, $M_y$, $M_z$) des Koordinatenmeßgeräts und die Elektronik (13) zur Verstärkung und Weiterverarbeitung des Signals, welches der Meßkopf (7) im Moment des Kontakts mit dem Werkstück generiert. Das von der Elektronik (13) gelieferte Tastsignal dient einmal dazu, die Zählerstände der Zähler (18) mit den Meßwerten der Wegmeßsysteme zum Antastzeitpunkt einzufrieren und an einen Zwischenspeicher (26) zu übergeben. Das Signal dient weiterhin dazu, den in dem rollierenden Speicher (16) abgespeicherten zeitlichen Verlauf der Signale der Sensoren ($a_x$, $a_y$, $a_z$) bei jeder Antastung auszulesen und an den Mikroprozessor (24) der Steuerung zu übergeben, der diese Werte über den Datenbus an den Rechner (19) weitergibt, wo sie zur Korrektur der von der Elektronik (12) gelieferten Wegmeßwerte der Maßstäbe $M_x$, $M_y$ und $M_z$ weiterverarbeitet werden.

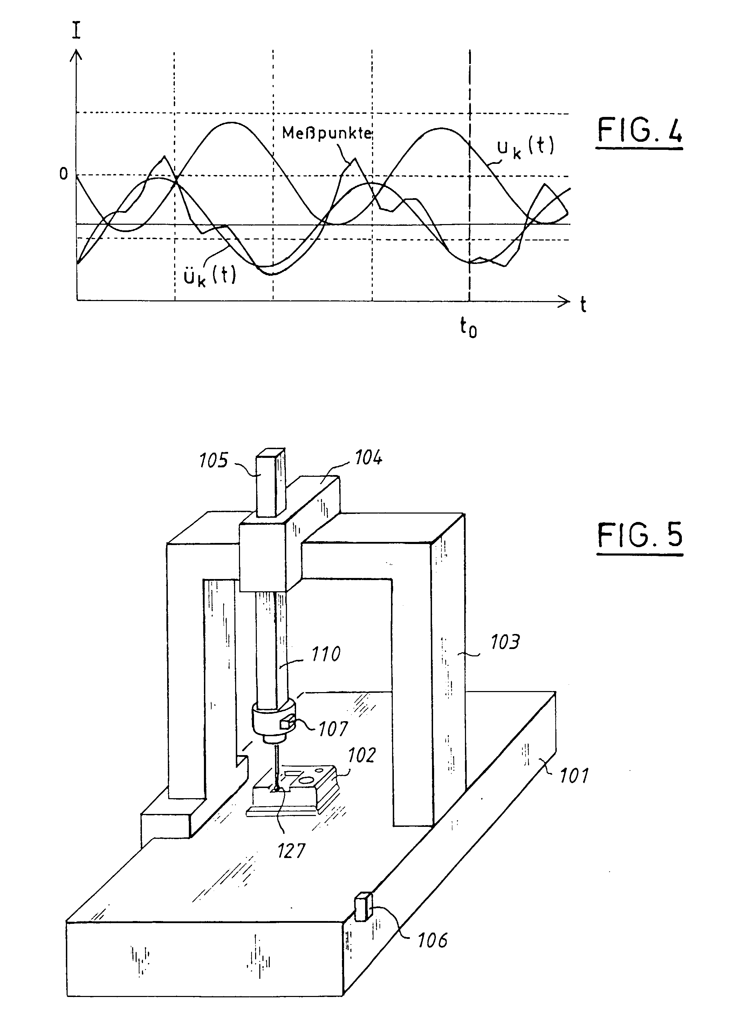

Der zeitliche Verlauf des Signals eines Beschleunigungssensors, z.B. $a_x$, ist beispielhaft in Figur 4 dargestellt (siehe dort die mit "Meßpunkte" bezeichnete Kurve). Wie bereits erwähnt ist es nicht ohne weiteres möglich, aus diesen Beschleunigungsmeßwerten den Auslenkweg des Meßarms (5) bzw. des Meßkopfs (7) zu ermitteln, denn die Meßwerte streuen relativ stark. Jedoch ist es möglich, die Meßwerte durch eine "saubere" gedämpfte periodische Schwingung zu approximieren, wenn die Resonanzfrequenz $\nu$ und die Abklingkonstante $\delta$, d.h. das Maß der Dämpfung der Schwingung bekannt sind. Der Graph $\ddot{u}_k(t)$ beschreibt ein solches approximiertes Beschleunigungssignal und aus diesem läßt sich dann auch eindeutig das Wegsignal (Graph $u_k(t)$) berechnen, das zur Korrektur der Koordinatenmeßwerte eigentlich benötigt wird.

Ein weiteres Problem liegt darin begründet, daß die Beschleunigungssensoren ($a_x$, $a_y$, $a_z$) nicht direkt am Ort der Tastkugel (27) des Meßkopfs (7) angeordnet werden können. Zur Umrechnung des Schwingungsweges am Ort der Sensoren ($a_x$, $a_y$, $a_z$) in den Schwingungsweg am Ort der Tastkugel (27) ist die Kenntnis über die Eigenformvektoren der Schwingung für die beiden Orte notwendig, mindestens jedoch muß das Verhältnis der Eigenformwerte an den beiden Orten bekannt sein. Dieses Verhältnis wird durch einen Tensor ($G_r$), d.h. eine Diagonalmatrix für jede Eigenform r der Schwingung beschrieben.

Nun hängen die Eigenfrequenzen $\nu$, Dämpfungsmaße $\delta$ und Eigenformen r der Störschwingungen aber von der jeweiligen Stellung des Meßkopfs (7) bzw. der Meßschlitten des Koordinatenmeßgeräts im Meßbereich ab. Daher werden die Eigenfrequenzen $\nu$, Dämpfungsmaße $\delta$ und eigenformabhängigen Tensoren ($G_r$) einmal für das Koordinatenmeßgerät nach Figur 1 ermittelt und in einer Datei im Speicher (20) des Rechners (19) des Koordinatenmeßgeräts abgelegt.

Gemessen werden die genannten Parameter auf folgende Weise: die Eigenfrequenzen und Dämpfungsmaße werden aus Ausschwingkurven mittels des sogenannten Polyreferenzverfahrens, einem Verfahren zur Modalanalyse bestimmt. Hierfür wird z.B. von der Firma SDRC (Structural Dynamics Research Corporation) eine Software angeboten mit der Bezeichnung TDAS (Test Data Analysis). Die Ausschwingkurven erhält man beispielsweise, indem man die Beschleunigungssignale der Sensoren ($a_x$, $a_y$, $a_z$) aufzeichnet, die entstehen, wenn das Koordinatenmeßgerät angehalten (abgebremst) wird.

Die Eigenfrequenzen und Dämpfungsmaße werden an verschiedenen Stützstellen im Meßbereich bestimmt. Für Punkte zwischen diesen Stützstellen können die Parameter bei der anschließenden Korrekturrechnung interpoliert werden.

Die Eigenformtensoren ($G_r$) könnten z.B. mit Hilfe einer finiten Elementemethode rechnerisch ermittelt werden. Das ist jedoch sehr aufwendig, da für jede Stützstelle die Ausfahrlänge der Meßschlitten unterschiedlich ist und demzufolge für alle Stützstellen verschiedene Modelle der Maschinengeometrie gerechnet werden müssten. Es ist daher zweckmäßiger die Tensoren zu ermitteln, indem man den Meßkopf (7) des Koordinatenmeßgeräts an den Stützstellen positioniert und dann die Maschinenstruktur harmonisch über die Antriebe in den einzelnen Eigenfrequenzen anregt. Mißt man dann einerseits mit z.B. einem Laserinterferometer den zeitlichen Verlauf des Wegsignals der Schwingung am Ort des Meßkopfs (7) und gleichzeitig die Beschleunigungssignale der Sensoren ($a_x$, $a_y$, $a_z$), so kann man anschließend die erforderlichen Eigenformparameter aus den Wegmeßwerten des Laserinterferometers und den Beschleunigungssignalen der Sensoren direkt bestimmen.

Wie vorstehend ausgeführt sind also im Speicher (20) des Rechners (19) die Eigenfrequenzen $\nu$ der signifikanten Störschwingungen, deren Dämpfungsmaße $\delta$ und die eigenformabhängigen Tensoren ($G_r$) nach Art eines mehrdimen-

EP 0 657 715 B1

sionalen Datenfelds für eine Reihe von Stützstellen im Meßbereich des Koordinatenmeßgeräts nach Figur 1 gespeichert. Da die Maschinenstruktur sich beim Verfahren des X-Wagens (2) in Bezug auf die auftretenden Störschwingungen kaum ändert, ist es ausreichend, ein zweidimensionales Datenfeld mit Werten der Korrekturparameter an Stützstellen in der Y/Z-Ebene aufzunehmen.

Bei der Berechnung der Schwingungsamplitude der Tastkugel (27) zum Antastzeitpunkt wird auf den gespeicherten Signalverlauf der Beschleunigungssignale der Sensoren ($a_x$, $a_y$, $a_z$) zurückgegriffen, die mit den Korrekturparametern $v$, $\delta$ und $G_r$ = Eigenformtensor verrechnet werden.

Zusammengefaßt läuft die Korrektur des schwingungsbedingten Meßfehlers bezogen auf die Tastkugel zum Antastzeitpunkt folgendermaßen ab

- zuerst werden einmal und vorab an verschiedenen Stützstellen im Meßbereich des Koordinatenmeßgeräts die Eigenfrequenzen $v_r$ und Dämpfungsmaße $\delta_r$ bestimmt, die zu einzelnen Eigenformen (r) gehören, aus denen sich die Störschwingung zusammensetzt. Weiterhin werden, ebenfalls für jede Stützstelle, die Eigenformfaktoren $G_r$ bestimmt, die das Verhältnis der Eigenformvektoren am Ort des Sensors bzw. Schwingungsaufnehmers und am Ort der Tastkugel beschreiben.

- Die so bestimmten Parameter werden für die nachfolgende Korrektur abgespeichert.

- Während eines Meßvorgangs wird der zeitliche Verlauf der Signale der Schwingungssensoren in der Nähe des Antastzeitpunktes gespeichert,

- an diesem gespeicherten Signalverlauf wird unter Verwendung der vorab gemessenen Parameter $v_r$ und $\delta_r$ eine "saubere" gedämpfte Schwingung bestmöglich angepaßt.

- Diese "saubere" Schwingung, die z.B. den Verlauf des Beschleunigungssignals beschreibt, wird in das zugehörige Wegsignal umgerechnet bzw. in dessen zeitlichen Verlauf.

- Dieses Wegsignal wird mit Hilfe der vorher ermittelten Eigenformfaktoren in ein Fehlersignal am Ort der Tastkugel umgerechnet bzw. in dessen zeitlichen Verlauf.

Das Gleichungssystem, das der Berechnung zugrundeliegt, wird nachstehend aus grundlegenden Betrachtungen abgeleitet und zwar unter der Voraussetzung, daß man es mit freien Schwingungen zu tun hat, d.h., daß sich das Koordinatenmeßgerät zum Antastzeitpunkt entweder mit gleichförmiger Geschwindigkeit bewegt oder still steht. In diesem kräftefreien Zustand muß sich das Koordinatenmeßgerät außerdem noch eine gewisse Zeitspanne vor dem Antastzeitpunkt befinden, nämlich während der Zeitspanne, in der die Signale der Beschleunigungssensoren $a_x$, $a_y$, $a_z$ für die Auswertung in den Speicher (16) aufgenommen wurden.

Grundlagen

Schwingt eine linear elastische Struktur aufgrund einer irgendwann erfolgten Anregung, ohne daß weiterhin irgendwelche äußeren Kräfte auf sie einwirken, also auch bei Bewegung mit konstanter Geschwindigkeit, so läßt sich diese Bewegung eines viskos gedämpften Systems an einem Punkt k unter der Voraussetzung, daß alle Eigenwerte komplex sind, beschreiben durch:

$$u_k(t) = \sum_{r=1}^{n} \{ \ \bar{z}_r \ \bar{\phi}_{kr} \ e^{\bar{\lambda}_r t} + \bar{z}_r^* \ \bar{\phi}_{kr}^* \ e^{\bar{\lambda}_r^* t} \} \tag{1}$$

Setzt man weiterhin voraus, daß die Eigenformen reell sind ("Bequemlichkeitshypothese"), so kann man schreiben:

$$u_k(t) = \sum_{r=1}^{n} e^{-\delta_r t} \{ X_{cr} \cos(v_r t) + X_{sr} \sin(v_r t) \} \phi_{kr} \tag{2}$$

Dabei bedeuten:

5

$\bar{\lambda}_r = -\delta_r + j\, \nu_r$ :  Eigenwert des r-ten Modes

$\delta_r$ :  Abklingkonstante des r-ten Modes

$\nu_r$ :  Resonanzfrequenz des r-ten Modes

$\bar{\phi}_{kr}$ :  Eigenformvektor am Punkt k des r-ten Modes

$\bar{Z}_r, X_{cr}, X_{sr}$ :  Konstanten, die u.a. die Anfangsbedingungen der Schwingung enthalten

Ausführliche Herleitungen sind für diskrete Systeme, z.B. von H. G. Natke in seinem Buch "Einführung in die Theorie und Praxis der Zeitreihen- und Modalanalyse", Vieweg Verlag, Braunschweig 1983, angegeben. Gleichungen (5.82), (5.86). Daß diese beiden Gleichungen sehr ähnlich sind und Gleichung (2) nur einen Spezialfall von Gleichung (1) darstellt (reelle Eigenformen) erkennt man, wenn man Gleichung (1) etwas umformt. Man erhält dann:

$$u_k(t) = \sum_{r=1}^{n} e^{-\delta_r t} \, [2(\text{Re}\{\bar{Z}_r\}\text{Re}\{\bar{\phi}_{kr}\} - \text{Im}\{\bar{Z}_r\}\text{Im}\{\bar{\phi}_{kr}\}) \cos(\nu_r t)$$

$$- 2 \, (\text{Re}\{\bar{Z}_r\}\text{Im}\{\bar{\phi}_{kr}\} + \text{Im}\{\bar{Z}_r\}\text{Re}\{\bar{\phi}_{kr}\}) \, \sin(\nu_r t)] \qquad (3)$$

Praktisch bedeutet diese Beziehung, daß sich eine beobachtete freie Schwingung aus der Überlagerung von Ausschwingkurven in den einzelnen Eigenfrequenzen der Struktur zusammensetzt. Man sieht außerdem an den Gleichungen, daß man aus einzelnen Ausschwingkurven nicht erkennen kann, ob komplexe oder reelle Eigenformen bei der Struktur vorliegen.

Bekannt sind im allgemeinen die modellabhängigen Parameter Eigenfrequenzen, Dämpfungsmaße und Eigenformen, die man für die jeweilige Struktur aus einer theoretischen Berechnung nach der Methode der finiten Elemente (FEM) und/oder aus Messungen und anschließender Modalanalyse ermitteln kann. Eine FEM-Rechung liefert weit zuverlässigere Ergebnisse für die Eigenformen und die modale Masse, während die Eigenfrequenzen aus der Modalanalyse besser sind und die Dämpfungsmaße nur versuchstechnisch zu bestimmen sind.

Unbekannt sind in Gl. (1) die Koeffizienten $\bar{Z}_r$ bzw. in Gl. (2) die Koeffizienten $X_{cr}$ und $X_{sr}$, die mit Hilfe der Anfangsbedingungen der Schwingung bestimmt werden können.

Eine praktische Möglichkeit der Ermittlung der Koeffizienten ist die lineare Anpassung von Gl. (1) bzw. Gl. (2) an einen beliebigen Zeitabschnitt der Ausschwingkurve, vorzugsweise nahe dem Antastzeitpunkt. Hierbei ergibt sich der Vorteil, daß auch noch die Auswirkung anderer Mechanismen zur Schwingungsanregung (Bodenbeschleunigungen) zu einem Großteil berücksichtigt werden, d.h. es sind alle Kräfte erfaßt, die vor dem Zeitintervall einwirken, das zur Ermittlung der von den Anfangsbedingungen abhängigen Koeffizienten benutzt wird.

Zur direkten Ermittlung der unbekannten Koeffizienten in Gl. (1) bzw. in Gl. (2) benötigt man einen Wegaufnehmer, der die Schwingung eines Punktes des Koordinatenmeßgeräts in Bezug auf ein ortsfestes Koordinatensystem erfaßt. Da dieser jedoch nicht vorhanden ist und stattdessen Beschleunigungsaufnehmer zur Erfassung der Schwingung eingesetzt werden, wird die Schwingbeschleunigung benötigt, die sich durch zweimaliges Differenzieren von (1) ergibt zu:

$$\ddot{u}_k(t) = \sum_{r=1}^{n} \{ \bar{\lambda}_r^2 \, \bar{Z}_r \, \bar{\phi}_{kr} \, e^{\bar{\lambda}_r t} + \bar{\lambda}_r^{*2} \, \bar{Z}_r^{*} \, \bar{\phi}_{kr}^{*} \, e^{\bar{\lambda}_r^{*} t} \} \qquad (6)$$

bzw. aus Gl. (2) zu:

$$\ddot{u}_k(t) = \sum_{r=1}^{n} e^{-\delta_r t} \{ (\delta_r^2 X_{cr} - 2 v_r \delta_r X_{sr} - v_r^2 X_{cr}) \cos(v_r t)$$

$$+ (\delta_r^2 X_{sr} + 2 v_r \delta_r X_{cr} - v_r^2 X_{sr}) \sin(v_r t) \} \phi_{kr} \qquad (7)$$

Mit den Gleichungen GL. (1) bis Gl. (7) ist aber jetzt erst die Schwingung eines Punktes in einem ortsfesten Koordinatensystem beschrieben.

Gefragt ist jedoch nach dem Meßfehler, der durch die Schwingung verursacht wird. Deshalb soll zunächst untersucht werden, welcher Zusammenhang zwischen den Schwingungen nach Gl. (1) bis Gl. (7) und einem zu erwartenden Meßfehler besteht.

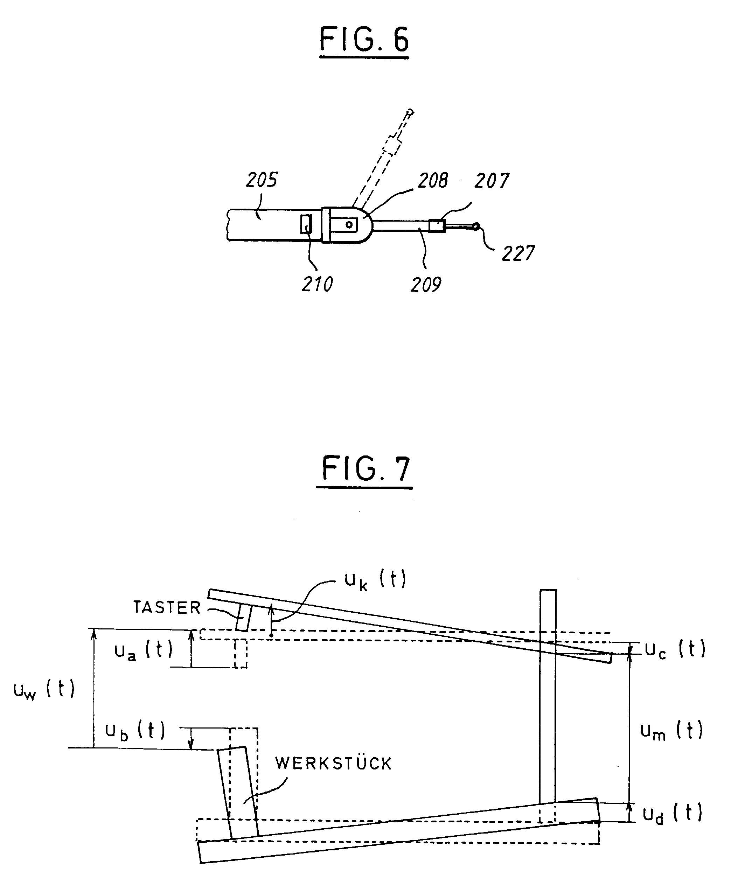

Daß zwischen der Bewegung eines Punktes und dem tatsächlichen Meßfehler aufgrund der Schwingung durchaus eine größere Differenz bestehen kann, verdeutlicht Figur 7.

Wie man dort sehen kann, treten bei einer durch eine Schwingung verformten Struktur im wesentlichen zwei zeitabhängige Fehler auf, nämlich einmal ein gegenüber der nichtausgelenkten Struktur variierender Abstand zwischen Werkstück und Taster $f_w(t)=(u_b(t)-u_a(t))$ und ein Fehler am Meßsystem $f_m(t)=(u_c(t)-u_d(t))$. Der Gesamtfehler, d.h. der Wert der von dem am Meßsystem abgelesenen Wert subtrahiert werden muß, um den korrekten Meßwert ohne Einfluß von Schwingungen zu erhalten, ergibt sich aus der Differenz dieser Teilfehler mit:

$$f(t) = f_w(t) + f_m(t) = u_b(t) - u_a(t) + u_c(t) - u_d(t) \qquad (8)$$

Beachtet werden muß außerdem, daß der beobachtete Weg $u_k(t)$ am Ort des Beschleunigungsaufnehmers i.a. verschieden ist von dem Weg $u_a(t)$ an der Tastkugel.

Bei Ständermeßgeräten kann man oft davon ausgehen, daß aufgrund der Massenverhältnisse die Bewegung $u_b(t)$ und $u_d(t)$ verhältnismäßig gering sind und daher vernachlässigt werden können, speziell bei einem Balken-Gerät mit relativ großem Fundament.

Zur Korrektur der Koordinaten-Meßwerte sollen zweckmäßig allerdings nur an einer Stelle am Gerät Beschleunigungsaufnehmer eingesetzt werden, so daß man nur die eine Bewegung ($u_k(t)$ nach Figur 7) beobachten kann.

Zur Umrechnung der beobachteten Bewegung $u_k(t)$ auf den Meßfehler soll zunächst wieder Gl. (1) bzw. Gl. (2) betrachtet werden. Der einzige in diesen Gleichungen ortsabhängige Parameter ist der Eigenformvektor $\phi_{kr}$. Andererseits ist der Eigenformvektor nicht zeitabhängig. Man kann also jede der zum Gesamtfehler beitragenden Bewegung $u_a(t)$, $u_b(t)$, $u_c(t)$ und $u_d(t)$ analog zu Gl. (1) oder Gl. (2) schreiben, wobei sich jeweils nur der ortsabhängige Eigenformvektor ändert. So ergibt sich z.B. für die Bewegung $u_a(t)$ statt Gl. (1):

$$u_a(t) = \sum_{r=1}^{n} \{ \overline{z}_r \overline{\phi}_{ar} e^{\overline{\lambda}_r t} + \overline{z}_r^* \overline{\phi}_{ar}^* e^{\overline{\lambda}_r^* t} \} \qquad (9)$$

Im nächsten Schritt kann man dann noch einen Tensor $\overline{G}_r$, eine Diagonalmatrix für jede Eigenform r, einführen, der das Verhältnis der Eigenformwerte, die den Meßfehler beeinflussen, zu dem Eigenformvektor am Beobachtungsort darstellt:

$$\overline{G}_r \overline{\phi}_{kr} = \overline{\phi}_{br} - \overline{\phi}_{ar} + \overline{\phi}_{cr} - \overline{\phi}_{dr} \qquad (10)$$

bzw. bei Voraussetzung reeller Eigenformen:

$$G_r \phi_{kr} = \phi_{br} - \phi_{ar} + \phi_{cr} - \phi_{dr} \qquad (11)$$

Damit kann man dann den Meßfehler in ähnlicher Weise wie Gleichung (1) bzw. Gleichung (2) ausdrücken mit:

$$f(t) = \sum_{r=1}^{n} \{ \bar{Z}_r \, \bar{G}_r \, \bar{\phi}_{kr} \, e^{\bar{\lambda}_r t} + \bar{Z}_r^{*} \, \bar{G}_r^{*} \, \bar{\phi}_{kr}^{*} \, e^{\bar{\lambda}_r^{*} t} \} \qquad (12)$$

bzw. bei Voraussetzung reeller Eigenformen:

$$f(t) = \sum_{r=1}^{n} e^{-\delta_r t} \{ X_{cr} \cos( V_r t) + X_{sr} \sin( V_r t) \} \, G_r \, \phi_{kr} \qquad (13)$$

Ermittlung der Bewegung aus der Beschleunigung

Bei Messungen mit Beschleunigungsnehmern als Beobachter werden Funktionen entsprechend den Gleichungen Gl. (6) bzw. Gl. (7) erfaßt. Bei Betrachtung dieser Gleichungen erkennt man, daß verschiedene Parameter linear voneinander abhängig sind, wenn man nur einen Meßort k voraussetzt ($\bar{Z}_r \bar{\phi}_{kr}$ in Gl. (6) bzw. $X_{sr} \phi_{kr}$ und $x_{cr} \phi_{kr}$ in Gl. (7)). Das bedeutet aber, daß man diese Parameter nur in Kombination aus einem gemessenen Beschleunigungssignal ermitteln kann. Eindeutig zerlegen kann man das gemessene Signal in folgender Form:

$$\ddot{u}_k(t) = \sum_{r=1}^{n} e^{-\delta_r t} \{ a_{kcr} \cos( V_r t) + a_{ksr} \sin( V_r t) \} \qquad (14)$$

Hier sind die Anfangsbedingungen in den beiden reellen Vektoren $a_{kcr}$ und $a_{ksr}$ enthalten.
Für einen Koeffizientenvergleich formt man zunächst Gl. (6) etwas um und erhält:

$$\ddot{u}_k(t) = \sum_{r=1}^{n} e^{-\delta_r t} [2(\text{Re}\{\bar{\lambda}_r^2\}\text{Re}\{\bar{Z}_r\bar{\phi}_{kr}\} - \text{Im}\{\bar{\lambda}_r^2\}\text{Im}\{\bar{Z}_r\bar{\phi}_{kr}\})\cos( V_r t)$$

$$- 2(\text{Re}\{\bar{\lambda}_r^2\}\text{Im}\{\bar{Z}_r\bar{\phi}_{kr}\} + \text{Im}\{\bar{\lambda}_r^2\}\text{Re}\{\bar{Z}_r\bar{\phi}_{kr}\})\sin( V_r t)] \qquad (15)$$

Berücksichtigt man weiterhin, daß:

$$\text{Re}\{\bar{\lambda}_r^2\} = \delta_r^2 - v_r^2$$

$$\text{Im}\{\bar{\lambda}_r^2\} = -2\,\delta_r\,v_r \qquad (16)$$

ist, so erhält man zur Ermittlung der Koeffizienten $\bar{Z}_r\bar{\phi}_{kr}$ das Gleichungssystem:

$$\begin{bmatrix} \delta_r^2 - \nu_r^2 & 2\,\nu_r\,\delta_r \\ \\ 2\,\nu_r\,\delta_r & \nu_r^2 - \delta_r^2 \end{bmatrix} \begin{bmatrix} 2\ \text{Re}\ \{\bar{Z}_r\bar{\phi}_{kr}\} \\ \\ 2\ \text{Im}\ \{\bar{Z}_r\bar{\phi}_{kr}^T\} \end{bmatrix} = \begin{bmatrix} \mathbf{a}_{kcr}^T \\ \\ \mathbf{a}_{ksr}^T \end{bmatrix} \qquad (17)$$

und damit die Lösung:

$$2\,\text{Re}\,\{\bar{Z}_r\,\bar{\phi}_{kr}^T\} = \frac{\delta_r^2 - \nu_r^2}{(\delta_r^2 + \nu_r^2)^2}\,a_{kcr}^T + \frac{2\,\nu_r\,\delta_r}{(\delta_r^2 + \nu_r^2)^2}\,a_{ksr}^T$$

$$2\,\text{Im}\,\{\bar{Z}_r\,\bar{\phi}_{kr}^T\} = \frac{2\,\nu_r\,\delta_r}{(\delta_r^2 + \nu_r^2)^2}\,a_{kcr}^T - \frac{\delta_r^2 - \nu_r^2}{(\delta_r^2 + \nu_r^2)^2}\,a_{ksr}^T \qquad (18)$$

Geht man entsprechend vom Ansatz mit reellen Eigenformen aus (Gl. (7)), so erhält man statt Gl. (17) das Gleichungssystem:

$$\begin{bmatrix} \delta_r^2 - \nu_r^2 & 2\,\nu_r\,\delta_r \\ \\ 2\,\nu_r\,\delta_r & \nu_r^2 - \delta_r^2 \end{bmatrix} \begin{bmatrix} X_{cr}\,\phi_{kr}^T \\ \\ -X_{sr}\,\phi_{kr}^T \end{bmatrix} = \begin{bmatrix} \mathbf{a}_{kcr}^T \\ \\ \mathbf{a}_{ksr}^T \end{bmatrix} \qquad (19)$$

Vergleicht man diese Beziehungen mit Gl. (17), so erkennt man den Zusammenhang zwischen dem Ansatz mit komplexen Eigenformen und dem mit reellen Eigenformen:

$$2\,\text{Re}\,\{\,\bar{Z}_r\,\bar{\phi}_{kr}^T\,\} = X_{cr}\,\phi_{kr}^T$$

$$2\,\text{Im}\,\{\,\bar{Z}_r\,\bar{\phi}_{kr}^T\,\} = -X_{sr}\,\phi_{kr}^T \qquad (20)$$

Dieser Zusammenhang ist im übrigen auch im direkten Vergleich von Gl. (15) mit Gl. (7) unter Berücksichtigung von Gl. (16) zu erkennen.

Ermittlung der Koeffizienten aus gemessenen Beschleunigungswerten

Als nächste Aufgabe bleibt schließlich noch die praktische Ermittlung der Koeffizienten $\mathbf{a}_{kcr}$ und $\mathbf{a}_{ksr}$ nach Gl. (14) aus einem aufgenommenen Meßsignal. Dabei wird zunächst einmal angenommen, daß die Beschleunigungssignale am Beobachtungsort k für die jeweiligen Koordinatenrichtungen als diskrete Werte (Aliasingfreiheit wird vorausgesetzt) mit einer konstanten Zeitschrittweite $\Delta t$ in einem gewissen Zeitbereich vor der Antastung vorliegen. Bekannt sein muß außerdem, zu welchem Zeitpunkt in Bezug auf die gesammelten Werte die Meßwertübernahme erfolgte. Diesen Zeitpunkt kann man zunächst willkürlich mit t=0 festlegen was die nachfolgenden Rechnungen etwas vereinfacht.

An diese erfaßten Meßwerte kann dann eine Funktion nach Gl. (14) mittels eines least-square-Verfahrens angepaßt werden, wie in Figur 7 dargestellt ist.

Diese Ermittlung der von $\mathbf{a}_{kcr}$ und $\mathbf{a}_{ksr}$ aus gemessenen Werten $\ddot{u}_k(t_i)=\ddot{u}_{ki}$ ist dann mit Hilfe eines linearen Gleichungssystems recht einfach möglich, wenn man voraussetzt, daß die Resonanzfrequenzen $\nu_r$ und die Abklingkonstanten $\delta_r$ bekannt sind.

Dazu betrachtet man zunächst den mit einer Funktion $g_i(t)$ gewichteten Fehler an einem einzelnen Meßpunkte k zu einer Kurve nach Gl. (14):

$$g_i E_i = \sum_{r=1}^{n} [e^{-\delta_r t_i} \{a_{kcr} \cos(V_r t_i) + a_{ksr} \sin(V_r t_i)\}]$$

$$+ c_O + c_1 t - \ddot{u}_{ki} \qquad\qquad (21)$$

Die Konstante $c_O$ beschreibt hier einen Offset, der bei Verwendung von Beschleunigungsaufnehmern immer berücksichtigt werden sollte.

Die Konstante $c_1$ beschreibt einen linearen Signalanteil, der dem tatsächlichen Beschleunigungssignal überlagert ist (z.B. hervorgerufen durch die Trägheit des verwendeten Beschleunigungsaufnehmers bei ruckartigen Bewegungen).

Die Gewichtsfunktion $g_i = g(t_i)$ dient dazu, den Einfluß der einzelnen Meßwerte auf das Ergebnis etwas steuern zu können. Beim Antastvorgang liegen im allgemeinen exponentiell abklingende Schwingungen vor. Dadurch haben aber Meßwerte, die weiter zurück vom Antastpunkt liegen einen wesentlich größeren Einfluß auf eine Kurvenanpassung, als Meßwerte direkt zum Antastzeitpunkt. Zur Kompensation dieses Einflusses empfiehlt sich eine Gewichtsfunktion der Art $g_i = e^{\delta t_i}$, wobei für $\bar{\delta}$ eine mittlere Abklingkonstante einzusetzen ist (bzw. ein größerer Wert, um Meßwerte, die näher am Antastzeitpunkt liegen, noch höher zu gewichten). Das Gleichungssytem zur Ermittlung der Koeffizienten $a_{kcr}$ und $a_{ksr}$ erhält man aus den partiellen Ableitungen der Fehlerquadratsumme:

$$\sum_{i=1}^{m} \frac{\partial E_i^2 g_i^2}{\partial a_{kcr}} = 0 \; ; \qquad\qquad \sum_{i=1}^{m} \frac{\partial E_i^2 g_i^2}{\partial a_{ksr}} = 0 \; ;$$

$$\sum_{i=1}^{m} \frac{\partial E_i^2 g_i^2}{\partial c_0} = 0 \; ; \qquad\qquad \sum_{i=1}^{m} \frac{\partial E_i^2 g_i^2}{\partial c_1} = 0 \qquad\qquad (22)$$

Daraus folgt dann das Gleichungssystem:

$$\sum_{i=1}^{m} g_i^2 \begin{bmatrix} A_{cc11i} & A_{cs11i} & A_{cc12i} & \cdots & A_{cc1ni} & A_{cs1ni} & A_{c1i}t_i & A_{c1i} \\ A_{sc11i} & A_{ss11i} & A_{sc12i} & \cdots & A_{sc1ni} & A_{ss1ni} & A_{s1i}t_i & A_{s1i} \\ A_{cc21i} & A_{cs21i} & A_{cc22i} & \cdots & A_{cc2ni} & A_{cs2ni} & A_{c2i}t_i & A_{c2i} \\ A_{sc21i} & A_{ss21i} & A_{sc22i} & \cdots & A_{sc2ni} & A_{ss2ni} & A_{s2i}t_i & A_{s2i} \\ \cdot & \cdot & \cdot & \cdot & \cdot & \cdot & \cdot & \cdot \\ \cdot & \cdot & \cdot & \cdot & \cdot & \cdot & \cdot & \cdot \\ A_{ccn1i} & A_{csn1i} & A_{ccn2i} & \cdots & A_{ccnni} & A_{csnni} & A_{cni}t_i & A_{cni} \\ A_{scn1i} & A_{ssn1i} & A_{scn2i} & \cdots & A_{scnni} & A_{ssnni} & A_{sni}t_i & A_{sni} \\ A_{c1i}t_i & A_{s1i}t_i & A_{c2i}t_i & \cdots & A_{cni}t_i & A_{sni}t_i & t_i^2 & t_i \\ A_{c1i} & A_{s1i} & A_{c2i} & \cdots & A_{cni} & A_{sni} & t_i & 1 \end{bmatrix} \begin{bmatrix} \mathbf{a}_{kc1}^T \\ \mathbf{a}_{ks1}^T \\ \mathbf{a}_{kc2}^T \\ \mathbf{a}_{ks2}^T \\ \cdot \\ \cdot \\ \mathbf{a}_{kcn}^T \\ \mathbf{a}_{ksn}^T \\ \mathbf{c}_1^T \\ \mathbf{c}_0^T \end{bmatrix}$$

$$= \sum_{i=1}^{m} g_i^2 \begin{bmatrix} A_{c1i}\ddot{\mathbf{u}}_{ki}^T \\ A_{s1i}\ddot{\mathbf{u}}_{ki}^T \\ A_{c2i}\ddot{\mathbf{u}}_{ki}^T \\ A_{s2i}\ddot{\mathbf{u}}_{ki}^T \\ \cdot \\ \cdot \\ \cdot \\ A_{cni}\ddot{\mathbf{u}}_{ki}^T \\ A_{sni}\ddot{\mathbf{u}}_{ki}^T \\ \ddot{\mathbf{u}}_{ki}^T t_i \\ \ddot{\mathbf{u}}_{ki}^T \end{bmatrix} \qquad (23)$$

Die Abkürzungen in Gl. (23) haben dabei folgende Bedeutung:

$$A_{ccpqi} = e^{-(\delta_p + \delta_q)t_i} \cos(\nu_p t_i) \cos(\nu_q t_i)$$

$$A_{cspqi} = e^{-(\delta_p + \delta_q)t_i} \cos(\nu_p t_i) \sin(\nu_q t_i)$$

$$A_{scpqi} = e^{-(\delta_p + \delta_q)t_i} \sin(\nu_p t_i) \cos(\nu_q t_i)$$

$$A_{sspqi} = e^{-(\delta_p + \delta_q)t_i} \sin(\nu_p t_i) \sin(\nu_q t_i)$$

$$A_{cpi} = e^{-\delta_p t_i} \cos(\nu_p t_i)$$

$$A_{spi} = e^{-\delta_p t_i} \sin(\nu_p t_i) \tag{24}$$

Dieses Gleichungssystem ist in die Auswertesoftware des Rechners 9 des Koordinatenmeßgerätes inplementiert.

Die Berechnungen zur Aufstellung von Gl. (23) können durchgeführt werden, sobald dem Koordinatenmeßgerät die Koordinaten zur Antastung bekannt sind.

Nach Lösung von Gl. (23) können die resultierenden Koeffizienten $a_{kcr}$ und $a_{ksr}$ und die Konstantenvektoren $c_0$ und $c_1$ in Gl. (14) eingesetzt werden, und man erhält für jede Koordinatenrichtung entsprechend Figur 4 einen angepaßten Beschleunigungsverlauf $\ddot{u}_k(t)$.

Rechnet man die Koeffizienten nach Gl. (18) auf die Werte $Z_r \phi_{kr}$ bzw. $X_{sr} \phi_{kr}$ und $X_{cr} \phi_{kr}$ nach Gl. (20) um, so kann man auch den zugehörigen Verlauf des Schwingweges $u_k(t)$ nach Gl. (1) bzw. Gl. (2) darstellen (vgl. wieder Figur 7).

Dieser Schwingweg $u_k(t)$ am Ort der Schwingungsbeobachtung ist allerdings keinesfalls mit dem schwingungsbedingten Meßfehler gleichzusetzen. Der dynamische Meßfehler wird vielmehr wie vorstehend ausgeführt nach Gl. (12) bzw. Gl. (13) berechnet, wobei außer den Eigenfrequenzen $\nu_r$ und Abklingkonstanten $\delta_r$ auch noch die vorab bestimmten Eigenformfaktoren $\overline{G}_r$ bzw. $G_r$ berücksichtigt werden müssen, die das Verhältnis der Eigenformvektoren $\phi_{kr}$ am Ort der Sensoren $a_x$, $a_y$, $a_z$ und an der Tastkugel beschreiben.

Bei der Korrekturrechnung ist noch das Übertragungsverhalten der Beschleunigungssensoren ($a_x$, $a_y$, $a_z$) und der Elektronik (11) (Figur 3) zur Verarbeitung der Sensorsignale zu berücksichtigen. Deren Übertragungsfunktionen bzw. Frequenzgänge können ebenfalls einmalig ermittelt werden, indem man beispielsweise das Koordinatenmeßgerät an einer beliebigen Stelle in den jeweiligen Achsen harmonisch bei verschiedenen Frequenzen anregt und die Signale der Sensoren $a_x$, $a_y$ und $a_z$ bzw. die im Speicher (16) enthaltenen zeitlichen Verläufe des Beschleunigungssignals mit Lasermessungen vergleicht, die den Schwingungsweg des Meßarms wiedergeben. Die so ermittelten Frequenzgänge können durch eine geschlossene Funktion approximiert werden und den Korrekturparametern für die Eigenformen, d. h. dem Tensor ($G_r$) als Korrekturparameter zugeschlagen werden.

Bei der bisherigen Betrachtung wurde davon ausgegangen, daß der Taststift und die Tastkugel (27) am Meßkopf (7) in fester geometrischer Beziehung zum Ort der Sensoren ($a_x$, $a_y$, $a_z$) steht. Diese Voraussetzung ist jedoch nicht immer erfüllt. Oft wird der Meßwert eines Koordinatenmeßgeräts auch über eine sogenannte DSE, d.h. eine Drehschwenkeinrichtung am Meßarm befestigt, damit das Tastelement in verschiedene Raumrichtungen ausgerichtet werden kann. Dieser Fall ist in Figur 6 skizziert. An dem in der Figur mit (205) bezeichneten Meßarm ist der Meßkopf (207) mit dem Tastelement (227) über ein Verlängerungsstück (209) an den in zwei Achsen ausrichtbaren Teil der Drehschwenkeinrichtung (208) angesetzt. Der Ort, an dem sich die Beschleunigungssensoren ($a_x$, $a_y$, $a_z$) befinden, ist mit (210) bezeichnet. Da sich nun die räumliche Beziehung zwischen den Sensoren und dem Tastelement (227) ändern kann, sind für jede Stützstelle im Meßbereich des Koordinatenmeßgeräts, bei der die Korrekturparameter aufgenommen sind, und für jede Eigenfrequenz der Störschwingung drei zusätzliche Parameter nötig, die die zu einer Eigenform gehörenden Winkelstellung berücksichtigen.

Diese zusätzlichen Parameter beschreiben für die 3 Koordinatenrichtungen jeweils das Verhältnis der Eigenformvektoren $\phi_{kr}$ am Ort der Sensoren und am Ort der Tastkugel, d.h. winkelstellungsabhängige Umrechnungsfaktoren. Diese Eigenformfaktoren können entweder aus FEM-Modellen analytisch berechnet, versuchstechnisch ermittelt oder empirisch bestimmt werden.

Schließlich können die als Korrekturparameter bestimmten Eigenfrequenzen des Koordinatenmeßgeräts durch die Masse des zu vermessenden Werkstücks beeinflußt werden. Für das in Figur 1 dargestellte Koordinatenmeßgerät spielt dieser Einfluß eine sehr geringe Rolle, da dort die Maschinenbasis (1) in das Fundament z.B. einer Werkshalle eingelassen wird, die dann den Werkstücktisch darstellt, und deren Masse durch ein vor dem Gerät aufgesetztes Werkstück kaum verändert wird. Anders liegt der Fall jedoch bei Koordinatenmeßgeräten z.B. vom Portaltyp, bei denen die Maschinenbasis gleichzeitig den Werkstücktisch darstellt. Ein solches Gerät ist in Figur 5 skizziert. Es besteht aus einem Granittisch (101), auf dem ein Portal (103) horizontal verfahrbar ist. An dem ebenfalls horizontal jedoch in der dazu senkrechten Koordinatenrichtung auf dem Querträger des Portals verfahrbaren Schlitten (104) ist die vertikal verschiebbare Pinole (105) des Geräts gelagert. Diese trägt am unteren Ende den Meßkopf (107) mit dem Tastelement (127).

Das Schwingungsverhalten dieser Struktur wird von der Masse des auf dem Tisch (101) aufgespannten Werkstücks (102) beeinflußt und es kann bei diesem Maschinentyp nicht angenommen werden, daß sich der Werkstücktisch (101) bezüglich der Störschwingungen in Ruhe befindet.

Dennoch lassen sich auch in diesem Falle die schwingungsbedingten Fehler der Koordinatenmessung mit Hilfe von Beschleunigungssensoren erfassen, indem nämlich zusätzlich zu den drei in diesem Falle an der mit (110) bezeichneten Stelle im Meßkopf (107) angeordneten Sensoren, die die Schwingung der Pinole (105) erfassen, weitere Sensoren z.B. an der mit (106) bezeichneten Stelle am Meßtisch (101) des Gerätes angebracht werden. Mit diesen Sensoren am Tisch (101) lassen sich nun die Schwingungen des Werkstücktisches miterfassen und in die Korrekturrechnung einbeziehen. Die für diese Schwingungen zu bestimmenden Korrekturparameter und zwar speziell die Eigenfrequenzen sind nun aber von der Masse des Werkstücks (102) abhängig. Diese Schwierigkeit läßt sich umgehen, indem man mehrere Korrekturparameter für die Eigenfrequenzen des Tisches (101) bei unterschiedlichen Werkstückmassen bestimmt und im eigentlichen Meßbetrieb den gültigen Parametersatz durch Eingabe der aktuellen Werkstückmasse aufruft.

Einen weiteren Einfluß auf die Qualität des Korrekturrechnung hat der Zeittakt, zu dem die Signale der Sensoren ($a_x$, $a_y$, $a_z$) in den rollierenden Speicher (16) (Figur 3) übernommen werden. Denn benötigt wird ja die momentane Auslenkung des Meßkopfes (7) zum Zeitpunkt der Antastung und der Antastzeitpunkt $t_0$ fällt nicht notwendigerweise mit dem Maschinentakt zusammen. Bei Annahme einer Frequenz von 15 Hz für die Störschwingung (das entspricht einer Periodendauer von 67 ms) und einem Zeittakt von 5 ms entspricht die "Lücke" zwischen zwei im Maschinentakt gespeicherten Punkten des zeitlichen Verlaufs der Sensorsignale einem Phasenwinkel von etwa 30°. Entsprechend dieser Unsicherheit ist ein Fehler bis zur halben Schwingungsamplitude möglich. Es ist daher zweckmäßig, den schwingungsbedingten Koordinatenmeßfehler durch Extrapolation auf den exakten Antastzeitpunkt zu ermitteln, zu dem das Tastelement das zu vermessende Werkstück berührt.

Eine Möglichkeit besteht darin, den Antastzeitpunkt bei der nach dem Antasten durchgeführten Korrekturrechnung nachträglich aus der Antastkoordinate und den ebenfalls im Maschinentakt gelesenen Meßwerten der Maßstäbe des Koordinatenmeßgeräts zu extrapolieren.

Im beschriebenen Ausführungsbeispiel wurden Beschleunigungssensoren benutzt, um die Amplitude der Störschwingungen am Ort der Tastkugel zu ermitteln. Entsprechend stellt die Auswertung der Sensorsignale auf Gl. (7) ab, die den zweimal differenzierten Schwingungsweg beschreibt.

Natürlich ist es ebenso möglich, statt Beschleunigungssensoren solche zu verwenden, deren Signal entweder direkt den Schwingungsweg oder die Geschwindigkeit der Schwingung beschreibt. In diesen Fällen würde die Auswertung anhand von Gleichung (3) bzw. der einfach differenzierten Form von Gleichung (3) erfolgen.

**Patentansprüche**

1. Verfahren zur Korrektur von schwingungsbedingten Meßfehlern bei Koordinatenmeßgeräten, wobei

    - der zeitliche Verlauf der Störschwingungen mit Hilfe von Sensoren ($a_x$, $a_y$, $a_z$) an dem schwingenden Teil (5) des Koordinatenmeßgeräts laufend erfaßt und während eines Zeitintervalls gespeichert wird,
    - die Meßwerte der Sensoren mit gespeicherten Korrekturparametern verrechnet werden, welche die Eigenfrequenz ($v$) und die Dämpfung ($\delta$) der Schwingungen sowie die Amplituden- und Phaseninformation der zu den Störschwingungen beitragenden Eigenformen ($G_r$) der Schwingung beschreiben,
    - aus dem zeitlichen Verlauf der korrigierten Meßwerte der Sensoren ($a_x$, $a_y$, $a_z$) der schwingungsbedingte Meßfehler des Koordinatenmeßgerätes zum Antastzeitpunkt berechnet wird.

2. Verfahren nach Anspruch 1, wobei die Korrekturparameter für verschiedene Stellungen der Meßschlitten (2, 3, 4, 5) des Koordinatenmeßgerätes ermittelt und gespeichert sind.

3. Verfahren nach einem der Ansprüche 1 oder 2, wobei die Korrekturparameter als mehrdimensionales Datenfeld an Stützpunkten abhängig von der Stellung des Meßkopfs (7) des Koordinatenmeßgerätes in dessen Meßvolumen gespeichert sind und die Korrekturparameter bei Koordinatenmessungen zwischen den Stützpunkten aus den Korrekturparametern benachbarter Stützpunkte interpoliert werden.

4. Verfahren nach einem der Ansprüche 1-3, wobei für die Berechnung des schwingungsbedingten Meßfehlers der Koordinatenmessung der zeitliche Verlauf der Meßwerte der Sensoren ($a_x$, $a_y$, $a_z$) in einem vom Maschinentakt abgeleiteten Rhythmus abgespeichert wird und der schwingungsbedingte Meßfehler der Koordinatenmessung durch Extrapolation auf den exakten Antastzeitpunkt ($t_0$) ermittelt wird, zu dem der Taster am Meßkopf (7, 107) des Koordinatenmeßgeräts das zu vermessende Werkstück berührt.

5. Verfahren nach Anspruch 4, wobei die Meßwerte der Sensoren in einen rollierenden Speicher (16) eingelesen werden, der zum oder kurz nach dem Antastzeitpunkt ($t_0$) ausgelesen wird.

6. Verfahren nach einem der Ansprüche 1-5, wobei die gespeicherten Meßwerte der Sensoren ($a_x$, $a_y$, $a_z$) bei der Berechnung des schwingungsbedingten Meßfehlers der Koordinatenmessung unterschiedlich gewichtet werden, indem näher am Antastzeitpunkt ($t_0$) liegende Meßwerte bevorzugt werden.

**7.** Verfahren nach einem der Ansprüche 1-6, wobei die Korrekturparameter zusätzlich das Übertragungsverhalten der Sensoren ($a_x$, $a_y$, $a_z$) und der den Sensoren nachgeschalteten Signalverarbeitungseinrichtung (11) beschreiben.

**8.** Verfahren nach einem der Ansprüche 1-7, wobei das Verfahren auf einem Koordinatenmeßgerät angewendet wird, dessen Meßkopf bzw. Taster (207) in verschiedene Winkelstellungen im Meßraum des Koordinatenmeßgerätes ausrichtbar ist und die Winkelstellung durch zusätzliche Korrekturparameter berücksichtigt wird.

**9.** Verfahren nach einem der Ansprüche 1-8, wobei für die Berechnung der schwingungsbedingten Meßfehler der Koordinatenmessung die am Ort der Sensoren ($a_x$, $a_y$, $a_z$) gemessenen Schwingungswerte auf den Ort des Tastelements (27, 127, 227) des Meßkopfes des Koordinatenmeßgeräts umgerechnet werden.

**10.** Verfahren nach einem der Ansprüche 1-9, wobei mit den Sensoren alle drei Raumkomponenten (x, y, z) der Störschwingungen gemessen und die Korrektur einbezogen werden und die Korrekturparameter als Korrekturtensor ($G_r$) gespeichert sind.

**11.** Verfahren nach einem der Ansprüche 1-10, wobei die Korrekturparameter abhängig von der Masse des auf dem Tisch (101) des Koordinatenmeßgeräts aufgespannten Werkstücks (102) bestimmt und gespeichert sind und der für die Korrekturrechnung verwendete Parametersatz entsprechend der Werkstückmasse ausgewählt wird.

**12.** Koordinatenmeßgerät mit einem Meßkopf (7, 107, 207) und einer Einrichtung zur Korrektur von schwingungsbedingten Fehlern der Koordinatenmessung, welche einen oder mehrere Sensoren ($a_x$, $a_y$, $a_z$) zur Erfassung des zeitlichen Verlaufs der Störschwingungen enthält, denen der Meßkopf unterliegt, sowie einen Rechner (19), der aus den Meßwerten der Sensoren den schwingungsbedingten Fehler ermittelt, der bei Koordinatenmessungen mit dem Meßkopf (7, 107, 207) auftritt, wobei dem Rechner (19) eine Speichereinheit (20) zugeordnet ist, in der für verschiedene Stellungen des Meßkopfes (7, 107, 207) im Meßbereich des Koordinatenmeßgeräts Korrekturparameter abgelegt sind, welche die Eigenfrequenz ($\nu$) und die Dämpfung ($\delta$) der Schwingungen sowie die Amplituden- und Phaseninformation der zu den Störschwingungen beiEigenformen ($G_r$) der Schwingung beschreiben, sowie eine zweite Speichereinheit (16), in der der zeitliche Verlauf ($\ddot{u}_k(t)$) der Meßwerte der Sensoren ($a_x$, $a_y$, $a_z$) zumindest temporär speicherbar ist.

**13.** Koordinatenmeßgerät nach Anspruch 12, wobei die Sensoren Beschleunigungsaufnehmer ($a_x$, $a_y$, $a_z$) sind.

**14.** Koordinatenmeßgerät nach Anspruch 12, wobei die Sensoren in unmittelbarer Nähe des Meßkopfes (7, 207) oder im Meßkopf (107) des Koordinatenmeßgeräts angeordnet sind.

**15.** Koordinatenmeßgerät nach einem der Ansprüche 12-14, wobei zusätzliche Sensoren (106) am Werkstücktisch (101) des Koordinatenmeßgeräts angeordnet sind.

**Claims**

**1.** Method for correction of measurement errors due to vibration in coordinate measuring devices, comprising:

- continuously monitoring and storing the time course of interfering vibrations by means of sensors ($a_x$, $a_y$, $a_z$) on a vibrating portion (5) of said coordinate measuring device during a time interval,
- adjusting the measured values of said sensors with stored correction parameters that describe the natural frequency ($\gamma$) and the damping constants ($\delta$) of the vibrations and also the amplitude and phase information of the characteristic modes ($G_r$) of the vibrations contributing to the interfering vibrations,
- and calculating the measurement error of said coordinate measuring device due to vibration at the instant of probing from the time course of the corrected measured values of said sensors ($a_x$, $a_y$, $a_z$).

**2.** Method according to claim 1, further comprising determining and storing correction parameters for different positions of the measuring slides (2, 3, 4, 5) of said coordinate measuring device.

**3.** Method according to claim 1 or 2, further comprising storing said correction parameters as a multi-dimensional data field for reference points dependent on the position of a probe head of said coordinate measuring device in its measurement volume, and interpolating said correction parameters for coordinate measurements between said reference points from correction parameters of adjacent reference points.

4. Method according to claims 1 to 3, wherein for calculating the measurement error due to vibration of the coordinate measurement the method further comprising storing the time course of the measured values of said sensors ($a_x$, $a_y$, $a_z$) in a rhythm derived from the machine cycle and determining the measurement error due to vibration of the coordinate measurement by means of extrapolation to the exact instant of probing ($t_0$) at which the probe element on the probe head (7, 107) of said coordinate measuring device contacts the work piece to be measured.

5. Method according to claim 4, further comprising reading the measured values of said sensors into a first in, first out memory (16), which is read out at or shortly after the instant of probing ($t_0$).

6. Method according to claims 1 to 5, further comprising weighting the stored measured values of said sensors ($a_x$, $a_y$, $a_z$) differently when calculating the measurement error of said coordinate measurement due to vibration, with preference for measured values lying nearer to the instant of probing ($t_0$).

7. Method according to claim 1 to 6, wherein the correction parameters additionally describe the transmission behaviour of said sensors ($a_x$, $a_y$, $a_z$) and that of the signal processing device (11) that is connected to follow said sensors.

8. Method according to claims 1 to 7, further comprising using the method on a coordinate measuring device that has a probe head (207) that is alignable in different angular positions in the measurement space of said coordinate measuring device, and using additional correction parameters that take into account said angular positions.

9. Method according to claims 1 to 8, further comprising converting vibration values measured at the location of said sensors ($a_x$, $a_y$, $a_z$) to the location of the probe element (27, 127, 227) of the probe head of said coordinate measuring device for calculating the measurement errors, due to vibration, of the coordinate measurement.

10. Method according to claims 1 to 9, further comprising measuring all three spatial components (x, y, z) of the interfering vibrations with said sensors, and incorporating said spatial components into the correction, and storing said correction parameters as a correction tensor ($G_r$).

11. Method according to claims 1 to 10, further comprising determining and storing said correction parameters in dependence on the mass of the work piece (102) clamped on the table (101) of said coordinate measuring device, and selecting the set of parameters used for the correction calculation according to the work piece mass.

12. Coordinate measuring device having a probe head (7, 107, 207) and a device for correction of errors, due to vibration, of the coordinate measurement, said device comprising one or more sensor means ($a_x$, $a_y$, $a_z$) for monitoring the time course of interfering vibrations to which said probe head is subject, computer means (19) for determining from the measured values of said sensors the measurement error, due to vibration, which arise in coordinate measurements with said probe head (7, 107, 207), memory means (20) associated with said computer means (19), in which for different positions of said probe head (7, 107, 207) in the measuring region of said coordinate measuring device, correction parameters are stored that describe the natural frequency ($\gamma$) and the damping constants ($\delta$) of the vibrations and also the amplitude and phase information of the characteristic modes ($G_r$) of vibrations contributing to the interfering vibrations, and second memory means (16) in which the time course ($\ddot{u}_k$ (t)) of the measured values of said sensors ($a_x$, $a_y$, $a_z$) are at least temporarily storable.

13. Coordinate measuring device according to claim 12, in which said sensors are acceleration sensors ($a_x$, $a_y$, $a_z$).

14. Coordinate measuring device according to claim 12, in which said sensors are arranged in the immediate region of said probe head (7, 207) or in said probe head (107) of said coordinate measuring device.

15. Coordinate measuring device according to claims 12 to 14, further comprising additional sensors (106) arranged on the work piece table (101) of said coordinate measuring device.

**Revendications**

1. Procédé de correction des erreurs de mesure causées par les vibrations des machines à mesurer à coordonnées,

- la variation temporelle des vibrations parasites étant captée en continu à l'aide de capteurs ((ax, ay, az) installés sur la partie vibrante (5) de la machine à mesurer, et mémorisée pendant un intervalle de temps,
- les valeurs de mesure des capteurs étant exploitées avec des paramètres de correction mémorisés qui décrivent la fréquence propre (() et l'amortissement (() des vibrations, ainsi que l'information sur l'amplitude de vibration et la phase des formes propres (Gr) qui contribuent aux vibrations parasites,
- l'erreur de mesure de la machine à mesurer causée par la vibration au moment de la prise de contact avec la pièce étant calculée à partir de la courbe d'évolution temporelle des valeurs de mesure corrigées des capteurs (ax, ay, az).

2. Procédé selon revendication 1, les paramètres de correction étant déterminés et mémorisés pour différentes positions des chariots de mesure (2, 3 / 4, 5) de la machine à mesurer.

3. Procédé selon l'une des revendications 1 ou 2, les paramètres de correction étant mis en mémoire sous forme d'une table de données à plusieurs entrées, en plusieurs points d'appui en fonction de la position de la tête de mesure (7) de la machine à mesurer dans son volume de mesure, et les paramètres de correction pour les mesures de coordonnées effectuées entre les points d'appui étant interpolés à partir des paramètres de correction des points d'appui voisins.

4. Procédé selon l'une des revendications 1 - 3, pour le calcul de l'erreur de mesure de coordonnée causée par les vibrations, la variation temporelle des valeurs de mesure des capteurs (ax, ay, az) étant mémorisée à une cadence dérivée du cycle de la machine à mesurer et l'erreur de mesure de coordonnée causée par la vibration étant déterminée par interpolation au moment exact du palpage (t0), au moment où la tête de mesure (7, 107) de la machine à mesurer entre en contact avec la pièce à mesurer.

5. Procédé selon revendication 4, les valeurs de mesure des capteurs étant envoyés dans une mémoire FIFO (16), qui est lue au moment du palpage (t0) ou juste après.

6. Procédé selon l'une des revendications 1 - 5, les valeurs de mesure mémorisées des capteurs (ax, ay, az) étant pondérées différemment dans le calcul de l'erreur de mesure de coordonnée causée par la vibration, les valeurs de mesure proches du moment du palpage (t0) étant privilégiées.

7. Procédé selon l'une des revendications 1 - 6, au sens que les paramètres de correction décrivent également le comportement en transmission des capteurs (ax, ay, az) et du dispositif de traitement des signaux (11) raccordé à la suite des capteurs.

8. Procédé selon l'une des revendications 1 - 7, le procédé étant appliqué sur une machine à mesurer à coordonnées dont la tête de mesure ou le palpeur (207) est capable de prendre différentes positions angulaires dans le volume de mesure de la machine à mesurer, et la position angulaire étant prise en compte par des paramètres de correction supplémentaires

9. Procédé selon l'une des revendications 1 - 8, pour le calcul des erreurs de mesure de coordonnée causée par la vibration, les valeurs de vibration mesurées à l'endroit où se trouvent les capteurs (ax, ay, az) étant transformées en fonction du lieu de l'élément de palpage (27, 127, 207) de la tête de mesure de la machine à mesurer.

10. Procédé selon l'une des revendications 1 - 9, les capteurs mesurant les trois composantes spatiales (x, y, z) des vibrations parasites, ces composantes étant introduites dans la correction et les paramètres de correction mémorisés comme tenseur de correction (Gr).

11. Procédé selon l'une des revendications 1 - 10, les paramètres de correction étant déterminés et mémorisés en fonction de la masse de la pièce (102) bridée sur le marbre (101) de la machine à mesurer à coordonnées et le jeu de paramètres utilisé pour le calcul de correction étant choisi en fonction de la masse de la pièce.

12. Machine à mesurer à coordonnées avec une tête de mesure (7, 107, 207) et un dispositif pour la correction des erreurs de mesure de coordonnée causées par les vibrations, dispositif comprenant un ou plusieurs capteurs (ax, ay, az) pour saisir la variation temporelle des vibrations parasites, auxquelles est soumise la tête de mesure, ainsi qu'un ordinateur (19) qui, à partir des valeurs de mesure des capteurs, détermine l'erreur causée par les oscillations qui apparaît dans les mesures de coordonnées effectuées avec la tête de mesure (7, 107, 207) ; une unité de mémorisation (20) est affectée à l'ordinateur (19) dans laquelle les paramètres de correction sont rangés pour différentes positions de la tête de mesure (7, 107, 207) dans le volume de mesure de la machine à mesurer, ces paramètres de correction contenant l'information d'amplitude et de phase des formes propres (Gr)qui contribuent aux vibrations parasites, ainsi qu'une seconde unité de mémorisation (16) dans laquelle peut être enregistrée, du moins temporairement, la variation temporelle (ük (t)) des valeurs de mesure des capteurs (ax, ay, az).

13. Machine à mesurer à coordonnées selon revendication 12, les capteurs étant des capteurs d'accélération (ax, ay, az)

14. Machine à mesurer à coordonnées selon revendication 12, les capteurs étant disposés à proximité immédiate de la tête de mesure (7 , 207) ou dans la tête de mesure (107) de la machine à mesurer à coordonnées.

15. Machine à mesurer à coordonnées selon l'une des revendications 12-24, des capteurs supplémentaires (106) étant disposés sur le marbre (101) de la machine à mesurer.

FIG. 1

# FIG. 2

## FIG.3

FIG. 4

FIG. 5

## FIG. 6

## FIG. 7